# EUROPÄISCHE PATENTANMELDUNG

(11) **EP 2 216 458 A2**
(43) Veröffentlichungstag der Anmeldung: **11.08.2010**
(21) Anmeldenummer: 10001098.2
(22) Anmeldetag: 03.02.2010
(51) Int. Cl.: E04C 1/41

(54) **Lochziegel**

(30) Priorität: 04.02.2009 DE 102009007535; 18.02.2009 DE 102009009457
(71) Anmelder: Quick-Mix Gruppe Gmbh & Co. Kg, 49090 Osnabrück (DE)
(72) Erfinder: Bühning, Volker, 49163 Bohmte (DE); Boßmeyer, Ulrich, 49086 Osnabrück (DE); Kanig, Martin, Dr., 49565 Bramsche (DE)
(74) Vertreter: Engelmann, Kristiana

(57) **Zusammenfassung**

Ein Lochziegel (1) mit inneren Lochkammern (2,3), die zueinander parallel verlaufen und zu zumindest einer von zwei einander gegenüberliegenden Außenflächen ausmünden, wobei die Lochkammern (2,3) mit Mörtel hoher Trockenrohdichte gefüllt sind, wird im Sinne einer rationellen großtechnischen Fertigung schwerer schalldämmender und wärmespeichernder Ziegel in der Weise ausgestaltet, dass der Mörtel die Lochkammern (2,3) in pressverdichteter Form ausfüllt und

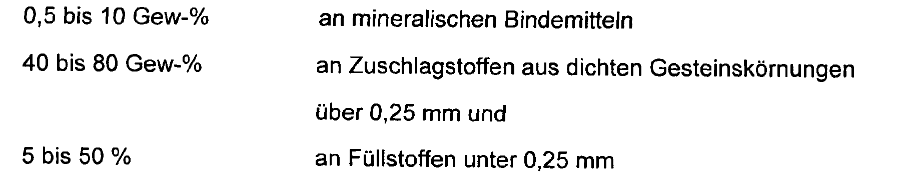

enthält (Fig. 1).

## Beschreibung

Die Erfindung betrifft einen Lochziegels nach dem Oberbegriff des Anspruchs 1 sowie ein Verfahren zu seiner Herstellung.

Lochziegel gibt es mit ungefüllten oder isolierstoffgefüllten Lochkammem, die insbesondere als Hochbauziegel im Bereich von Außenmauern eine gute Wärmeisolation bieten sollen. Die dazu verwandten Lochziegel sind üblicherweise im Sinn einer Arbeitsersparnis großformatig mit Höhen von ca. 25 cm ausgelegt und werden dabei oft im Sinn schneller und präziser Vermörtelung mit planen, ggf. nach dem Brennen parallel geschliffenen Lagerflächen versehen.

Die Verwendung von Lochziegeln bei Innenmauern ist demgegenüber gerade aufgrund des relativ geringen Gewichts eingeschränkt, mit dem ein begrenzter Schallschutz und auch eine begrenzte Eignung zur Klimaspeicherung einhergeht. Die Gestaltungsmöglichkeiten bei einem Lochziegel zur Erhöhung der Masse durch eine Verringerung oder Beseitigung der Lochkammern, etwa in der Form von massiven Pflasterklinkern oder früheren Hochbauziegeln, ist fertigungstechnisch unvorteilhaft, da die im Hochbau verlangten größeren Steinformate im grünen Scherben kaum durchzutrocknen und im Brennprozess hinsichtlich der Maßhaltigkeit nicht mehr beherrschen wären. Daneben wäre der Aufwand an Rohmaterial, an Trockenzeit und an Brennzeit erheblich.

Aus der DE 31 13 118 ist allerdings ein schalldämmender Mauerziegel aus einem Lochziegel bekannt, dessen Löcher flächenbündig mit einem Zementmörtel erfüllt sind. Dabei soll ein hochwertiger Zementmörtel verwendet werden, der gut fließfähig ist, schnell abbindet, nur gering schwindet und gut am Ziegel haftet. Ein derart vorgegebener Mörtel setzt einen hohen Anteil an Zement als Binder, eine Anzahl besonderer, im allgemeinen auch teurer Zusatzmittel und eine schnelle Verarbeitung voraus und eignet sich damit wenig für eine Massenfertigung. Insbesondere der hohe Bedarf an Zement, dessen Herstellung mit hohen CO₂-Emissionen verbunden ist, lässt sich bei einem auch für die Klimaspeicherung einzusetzenden Schalldämmziegel schwer vertreten.

Aufgabe der Erfindung ist es demgegenüber, einen Lochziegel so zu gestalten, dass er für die Erstellung von Innenwänden und optional Außenwänden im Hochbau vorteilhaft ist und mit vertretbarem Aufwand auf der Grundlage der hochentwickeften Fertigung von Lochziegeln herzustellen ist.

Gemäß der Erfindung wird diese Aufgabe von einem Lochziegel nach dem Oberbegriff des Anspruchs 1 ausgehend mit den kennzeichnenden Merkmalen des Anspruchs 1 gelöst.

Ein solcher Lochziegel mit einer schweren, verdichteten Mörtelfüllung lässt sich grundsätzlich in einer Linie mit ungefüllten Lochziegeln für den Außenwandbereich herstellen und verarbeiten, erzielt aber aufgrund seiner Masse im Innenwandbereich eine vorteilhafte Schalldämmung und eine gute Klimaspeicherfunktion. In einem hochpressverdichteten Zustand nehmen die Mörtelfüllungen einen festen Sitz in den Lochkammern ein, wobei sie für den eigenen Zusammenhalt und die Haftung an den Lochinnenwänden sehr wenig an Bindemitteln benötigen. Einsparungen an Bindet mitteln, vor allem an Zement, sind nicht nur wegen des Kostendrucks bei solchen Massenprodukten, sondern auch wegen der erheblichen CO₂-Emissionen bei der Zementherstellung vorteilhaft.

Dabei ist es für die Schalldämmung günstig, dass die kompakten Mörtelfüllungen in Lochkammern des Lochziegels eingelagert sind, dessen poröses Ziegelmaterial dämpfend für eine Unterbrechung von Schallfortpflanzungen und Schallbrücken wirkt, während die Mörtelfüllungen selbst aufgrund der höheren Massedichte den Schall aufnehmen.

Ebenso ist diese Materialkombination vorteilhaft in klimatischer Hinsicht, bei der die kompakten aber bindemittelarmen Mörtelfüllungen für eine ausreichende Temperaturspeicherung sorgen, wie sie im "Massivbau" erwartet wird, während der Lochziegel selbst als Mantel oder "verlorene Schalung" eine poröse, als Isolierung wie auch als saugfähige Oberfläche dienende Ummantelung bildet. Schwitzwassereffekte, die leicht an freiliegenden Mörtel- oder Betonflächen in Erscheinung treten, sind damit zu vermeiden.

Die verdichtete Form des eingelagerten Mörtels sorgt nicht nur für die angestrebte hohe Dichte, sondern auch für eine feste Verbindung zwischen Mörtelfüllung und Lochziegel und schließt insbesondere das Auftreten von Wandablösungen oder gar ein Herausfallen der Mörtelfüllungen aus.

Die dabei einzusetzenden Bindemittel können grundsätzlich mineralisch und/oder organisch ausgebildet sein. Vorzugsweise finden jedoch mineralische Bindemittel Verwendung. Mineralische Bindemittel, insbesondere Zement, in einem Mengenanteil von nur 1 bis 10 Gew-% sind hier vorteilhaft einzusetzen.

Die Zuschlagstoffe aus dichten Gesteinskömungen können quarzitische oder kalzitische Brechsande mit Vorteil umfassen, beispielsweise auch Kalksteinbrechsande, die jeweils als Körnungen ohne Lufteinschlüsse und damit im Sinne der dichten Mörtelgestaltung zu erhalten sind. Diese Zuschlagstoffe sind mit einem Gewichtsanteil von 40 bis 80 % anzusetzen, wobei die Gesteinskörnungen - in der üblichen Abgrenzung gegenüber den Gesteinsmehlen - im wesentlichen über Korngrößen von 0,25 mm liegen, auch wenn diese noch feinere Bestandteile als Staub oder Bruchanteile enthalten können, vorzugsweise aber im Bereich von 1 bis 4 mm angesetzt werden.

Bei den mit Gewichtsanteilen zwischen 5 und 50 % angesetzten Füllstoffen kommen Gesteinsmehle, Elektrofilterasche, Hüttensandmehl, Basaltmehl und dergleichen in Betracht. Besonders vorteilhaft ist aber im Zusammenhang mit der Fertigung von Lochziegeln Ziegelmehl vorzusehen, weiches aus Abfall- und Bruchmaterial aus der Lochziegelfertigung und insbesondere, bei der Fertigung von Lochziegeln mit geschliffenen Auflagerflächen als Schleifmehl in großen Mengen anfällt, die sonst aufwendig und umständlich entsorgt werden müssten. Insgesamt lässt sich mit einer passenden Zusammensetzung, etwa nach einer fachmännisch vorgegebenen Sieblinie, ein Mörtel hoher Dichte erzielen. Durch einen ausreichenden Pressdruck ist der Mörtel hohlraumfrei sozusagen "auf Block" zu verdichten und erhält damit nicht nur die angestrebte Dichte, sondern auch eine hohe Eigenfestigkeit.

Der Mörtel kann weiterhin durch Zusatzmittel verbessert sein, die in Form von Haftmitteln, Stellmitteln und/oder Wasserrückhaltemitteln in einer Menge von 0,1 bis 2 Gew-% zugesetzt sind. Ein Haftvermittler etwa aus einem Kunststoffdispersionspulver (Kleber) kann dabei den Verbund zwischen Mörtel und Ziegelmaterial verbessern. Ein Stellmittel wie Stärkeäther vermag die Verarbeitbarkeit des Mörtels bis zu seinem Aushärten zu verbessern oder ein Wasserrückhaltemittel der saugenden Wirkung des trockenen, ggf. noch heißen Ziegelmaterials in der Grenzschicht zum Mörtel entgegenwirken und dabei dem Mörtel die für das Abbinden erforderliche Wassermenge zu sichern.

Der Mörtel wird dabei vorzugsweise "erdfeucht", d.h. relativ trocken eingefüllt, so dass er kein oder nur wenig überschüssiges Wasser über den zum Abbinden des Bindemittels, insbesondere eines Zements erforderlichen Wasseranteil enthält. Dies verhindert, dass mit der Austrocknung (überschüssigen) Wassers Schrumpfungen, Gewichts- und Volumenvertuste eintreten. Insbesondere aber benötigt der mit Mörtel verfüllte Lochziegel dann keine Nachtrocknung und kann gleich beispielsweise im Paket gestapelt in Hüllfolien eingeschweißt werden, ohne dass es zu Feuchtigkeitsbildungen innerhalb der Folie oder zu Ausblühungen an den Lochziegeln kommt.

Die eingangs genannte Aufgabe wird dementsprechend auch mit einem Verfahren zur Herstellung von Lochziegeln gelöst, bei dem in die Lochkammern der gebrannten Ziegel erdfeuchter Mörtel eingepresst wird.

Der erdfeuchte Mörtel setzt dann beim Abbinden und Trocknen keine kritischen Feuchtigkeitsmengen frei, die beim Trocknen Schwindungen, Wandablösungen oder Poren zurücklassen könnten, und sitzt aufgrund der mit dem Einpressen erzielten Verdichtung fest in den Lochkammern. Dieses Verfüllen der Lochkammern mit Mörtel lässt sich also unproblematisch an eine tonverarbeitende Lochziegelfertigung moderner hochentwickelter Art anschließen, bei der beispielsweise auch schon die Lagerflächen des Lochziegels plan und parallel geschliffen werden können. Die Verwendung eines "mageren" Mörtels und dessen kompaktes Einpressen ermöglichen eine in eine Fertigungsstraße für Lochziegel eingefügte Mörtelverfüllung vor der Palettierung.

Das Herstellungsverfahren und der prinzipielle Aufbau einer hierzu vorgesehenen Vorrichtung wird in der Zeichnung dargestellt und nachfolgend näher beschrieben. In der Zeichnung zeigen in einer stark vereinfachten schematisierten Ansicht längs einer fortlaufenden Bearbeitungslinie:
- Fig. 1: das Befüllen eines Hochlochziegels mit Mörtel in einer Befüllstation und
- Fig. 2: das Verdichten des Mörtels im Hochlochziegel in einer Stampfstation.

Ein in der Zeichnung in einem vertikalen Längsschnitt veranschaulichter Hochlochziegel 1 mit Lochkammern 2,3, stirnseitigen Außenwänden 4, 5 und einer aus zwei Teilwänden zusammengesetzten Zwischenwand 6 hat eine für Hochlochziegel relativ einfache Grundform mit nur zwei der genannten Lochkammern 2,3 relativ einfachen und großen Querschnitts innerhalb des Steingrundrisses. Dieses ist von besonderem Interesse für ein Befüllen mit Mörtel und vor allem für ein effektives Einpressen. Die Zwischenwand 6 ist als Doppelwand mit einer inneren flachen Hohlkammer ausgeführt, um einerseits eine gleichmäßige Massenverteilung der Wände am Umfang der Lochkammern 2,3 zu erzielen, andererseits die Wandstärken aber im Hinblick auf die Formgebung, Trocknung und das Brennen des Tons gleichmäßig zu gestalten.

So hat das hier im Beispiel dargestellte Steinformat im Grundriss Abmessungen von rund 24,8 cm x 20 cm, innen mit den Lochkammern 2,3 in der Größe von ca. 6,5 cm x 14 cm ausgespart, so dass umfangseitig Wandstärken von 3 cm und innen an der Zwischenwand Wandstärken von 2 x 2,5 cm verbleiben. Diese Wandstärken sind mit Rücksicht auf eine moderne und insbesondere rasche Tonverarbeitung einerseits gering gehalten, andererseits aber ausreichend vorzusehen, um beim Einfüllen und Einpressen von Mörtel einen ausreichenden Berstdruck zu gewährleisten.

Der hier betrachtete Lochziegel hat der Zeichnung gemäß eine Höhe von ca. 15 cm, wird aber im Hinblick auf vorzugsweise verarbeitete Steinformate auch mit einer Höhe von 24,8 cm oder gar höher vorgesehen und zwar auch dann, wenn das Gewicht nach einer Mörtelfüllung auf dem Bau über ca. 25 kg hinausgeht und dann statt einer Vermauerung per Hand den Einsatz von Hebezeugen an der Baustelle erfordert.

Hochlochziegel der hier in Betracht gezogenen Art weisen oft schon durch kontrollierte Herstellungstechniken relativ plane und präzise zueinander beabstandete Außenflächen, insbesondere Lagerflächen auf, sind darüber hinaus aber oft noch an den Lagerflächen oben und unten beschliffen, um eine schnelle Dünnbettvermörtelung und präzise Steinlagenabstände zu gewährleisten.

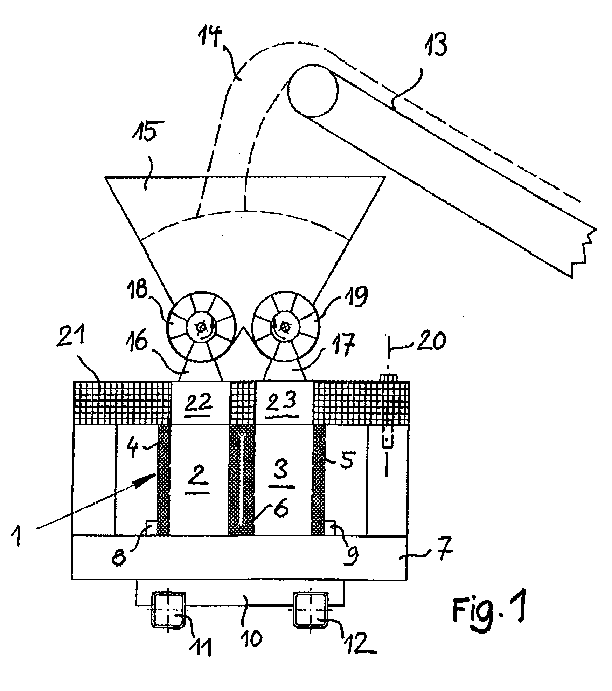

Im dargestellten Verfahren ist der Lochziegel 1 auf einen Wagen 7, mit dessen Oberfläche unterseitig bündig abschließend, zwischen Anschlagleisten 8,9 gesetzt, so dass die Lochkammern 2,3 oberseitig offen sind. Der Wagen 7 ist mit einem nicht näher dargestellten Fahrwerk 10 längs paralleler Schienen 11,12 verfahrbar. In der in Fig. 1 dargestellten Haltestellung befindet sich der Wagen 7 in einer Befüllstation und zwar so, dass über ein Förderband 13 Mörtel 14 in eine Schütte 15 eingegeben ist, aus deren zwei Auslässen 16,17 der Mörtel in die Lochkammern 2,3 eingegeben wird, wobei die genaue Dosierung mit Hilfe von Zelltadschleusen 18,19 erfolgt. Der Lochziegel 1 ist oberseitig durch eine im vorliegenden Fall horizontal um eine Achse 20 wegschwengbare Matrize 21 überlagert, die ihrerseits Durchlässe 22,23 aufweist, die mit den Lochkammern 2 bzw. 3 bündig übereinstimmen und dabei die Oberkanten der Lochziegelwände 4,5.6 abdecken. Überdies ermöglicht die Matrize 21 mit einer Höhe von beispielsweise 5 cm, dass Mörtel über die Lochziegelhöhe hinaus zunächst lose aufgefüllt und dann so weit nieder gepresst wird, dass die gepresste Mörtelfüllung mit der Lochziegeloberkante plan abschließt.

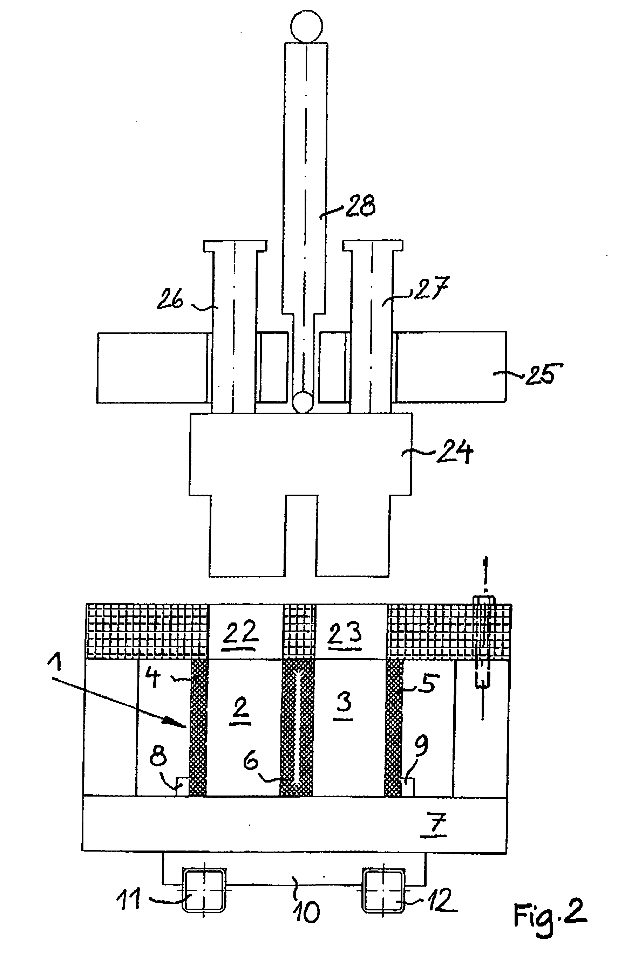

Das in Fig. 2 dargestellte Verpressen in einer Stampfstation erfolgt mit einem auf den Querschnitt der Lochkammern 2,3 mit unterseitigen Fortsätzen abgestimmten Stempel 24, der in einem die Bewegungsbahn des Wagens 7 mit den Schienen 11 und 12 umgreifenden druckfesten Rahmen 25 gelagert und mit Führungen 26,27 geführt ist, wobei ein Hydraulikzylinder 28 für das vertikale Niederpressen und Rückziehen des Stempels 24 vorgesehen wird. Der zunächst in der Befüllstation gemäß Fig. 1 lose einzufüllende Mörtel wird dann mit dem Stempel 24 verpresst.

Vorzugsweise erfolgt das Verpressen in mehreren Schritten, insbesondere dann, wenn wie hier die Lochkammern 2,3, eine Höhe aufweisen, die größer als die Querschnittsabmessungen sind. In einem solchen Fall ist die Verteilung des Pressdrucks über die volle Höhe bis unten hin nicht gewährleistet.

Im vorliegenden Fall wird der Mörtel beispielsweise auf eine 2/3-Höhe des Steinformates bzw. der Lochkammern aufgefüllt und mit dem Stempel 24 auf die halbe Füllhöhe, also etwa 113 der Höhe des Steinformates, zusammengepresst. Die Presskraft von beispielsweise 2 bis 2,5 t - entsprechend einem Flächendruck auf dem Mörtel von etwa 10 bis 14 kg/cm² - kann dabei von den hierauf ausgelegten Wänden 4,5,6 des Lochziegels ohne äußere Abstützung aufgenommen werden. Hilfsweise kommen aber auch in der Stampfstation Wandabstützungen von außen in Betracht, bei denen sich Stützplatten etwa mit elastischen Vorderflächen gegen die Außenseiten des Lochziegels 1 anlegen.

Zu dem ersten Pressvorgang wird hier die Matrize 21 weggeschwenkt, um der gezeichneten (geringen) Höhe der Stempelfortsätze des Stempels 24 weit genug nach unten eingreifen zu können. Bei nachfolgenden, im allgemeinen höchstens noch zweifachen Befüll- und Pressvorgängen kann dann die Matrize 21 in der den Lochziegel abdeckenden Stellung verbleiben, ohne zu behindern.

Es versteht sich, dass das Befüllen und Pressen nicht zwingend auf Wagen längs einer fortlaufenden Bahn erfolgen muss, sondern dass beispielsweise auch die aufeinander folgenden Füll- und Pressvorgänge auf einem Karusselltisch ausgeführt werden können. Ebenso ist es möglich, mit Hilfe von stationären Befüll- und Presseinrichtungen an einem feststehenden Ort abwechselnd zu füllen und zu pressen. Grundsätzlich ist auch ein einmaliges Befüllen und Pressen denkbar, insbesondere dann, wenn der Pressvorgang von zwei Seiten bzw. von oben und unten durchgeführt wird.

Dabei erlaubt es das Verpressen vor allem, dass "erdfeuchter" Mörtel, also Mörtel mit einem geringen Anteil an überschüssigem Wasser (über den stöchiometrischen Bedarf für den Abbindevorgang des Binders hinaus) verarbeitet wird. Ein solcher Mörtel verlangt keine Nachtrockenvorgänge und -zeit und sondert kein Schwitzwasser ab, wenn etwa Lochziegel der hier in Betracht kommenden Art nach der Mörtelbefüllung und Verpressung direkt gestapelt und/oder paketiert werden. Insbesondere für eine übliche Bandagierung mit Folie ist von Interesse, den nachfolgenden Austritt von Wasserdampf auszuschließen, der sich an einer solchen Folie dann leicht niederschlägt.

Ein Mörtel der hier beispielsweise verwendeten Art setzt sich wie folgt zusammen:
Portlandzement 8 Gew-%
Betonsand bis 4 mm Größe 76 Gew-%
Ziegelmehl 16 Gew-%
Vorstehende Zusammensetzung versteht sich ohne etwaige Zusatzmittel.

Die vorgenannte Trockenzusammensetzung wird zu einem Wasseranteil im Frischmörtel von ca. 9 Gew-% bzw. nach Berücksichtigung eines Feuchtegehalts bei den Zuschlägen durch Zugabe von ca. 8 Gew-% angemischt, um die erdfeuchte Konsistenz zu erzielen. Es ergibt sich ein Mörtel mit einer hohen Frischrohdichte von ca. 2.100 kg/m³.

## Patentansprüche

1. Lochziegel (1) mit inneren Lochkammern (2,3), die zueinander parallel verlaufen und zu zumindest einer von zwei einander gegenüberliegenden Außenflächen ausmünden, wobei die Lochkammern (2,3) mit Mörtel hoher Trockenrohdichte gefüllt sind, **dadurch gekennzeichnet, dass** der Mörtel die Lochkammern (2,3) in pressverdichteter Form ausfüllt und
| | |
|---|---|
| 0,5 bis 10 Gew-% | an mineralischen Bindemitteln |
| 40 bis 80 Gew-% | an Zuschlagstoffen aus dichten Gesteinskömungen über 0,25 mm und |
| 5 bis 50 % | an Füllstoffen unter 0,25 mm |
enthält.

2. Lochziegel (1) nach Anspruch 1, **dadurch gekennzeichnet, dass** die Zuschlagstoffe aus dichten Gesteinskörnungen quarzitische oder kalzitische Brechsande umfassen.

3. Lochziegel (1) nach Anspruch 1 oder 2, **dadurch gekennzeichnet, dass** die Füllstoffe mineralische Mehle umfassen.

4. Lochziegel (1) nach Anspruch 3, **dadurch gekennzeichnet, dass** die Füllstoffe Ziegelmehl, Gesteinsmehl, Basaltmehl, Hüttensandmehl und/oder Elektrofilterasche umfassen.

5. Lochziegel (1) nach einem der Ansprüche 1 bis 4, **dadurch gekennzeichnet, dass** der Mörtel Zusatzmittel wie Haftmittel, Stellmittel, und/oder Wasserrückhaltemittel jeweils in einer Menge von 0,1 bis 2 Gew-% enthält.

6. Lochziegel (1) nach einem der Ansprüche 1 bis 5, **dadurch gekennzeichnet, dass** er nicht mehr als vier Lochkammern (2,3) aufweist.

7. Lochziegel (1) nach einem der Ansprüche 1 bis 6, **dadurch gekennzeichnet, dass** die Lochkammern (2,3) von Wänden (4,5,6) mit einer Wandstärke von mindestens 10 mm, vorzugsweise mindestens 20 mm, starkwandig umgeben sind.

8. Verfahren zur Herstellung von Lochziegeln nach einem der Ansprüche 1 bis 7, **dadurch gekennzeichnet, dass** in die Lochkammern (2,3) der gebrannten Lochziegel (1) erdfeuchter Mörtel eingepresst wird.

9. Verfahren nach Anspruch 8, **dadurch gekennzeichnet, dass** der Mörtel mit zumindest einem Pressstempel (24) verdichtet wird.

10. Verfahren nach Anspruch 9, **dadurch gekennzeichnet, dass** die Lochziegel (1) auf einer Aufstellfläche (7) unterseitig abschließend aufgestellt und der Mörtel von oben eingefüllt und von oben mit zumindest einem Preßstempel (24) verdichtet wird.

11. Verfahren nach Anspruch 9 oder 10, **dadurch gekennzeichnet, dass** der Mörtel in mehreren Teilfüllungen eingebracht und verdichtet wird.

12. Verfahren nach einem der Ansprüche 8 bis 11, **dadurch gekennzeichnet, dass** die Lochziegel (1) im Anschluss an das Einpressen von Mörtel auf Paletten zu Paketen gestapelt und im Paket mit Kunststofffolie umhüllt werden.
